# EUROPEAN PATENT SPECIFICATION

(11) **EP 3 249 539 B1**
(45) Date of publication and mention of the grant of the patent: **18.08.2021**
(21) Application number: 15882315.3
(22) Date of filing: 16.02.2015
(51) Int. Cl.: G06F 12/08, G06F 12/0817, G06F 12/084

(54) **METHOD AND DEVICE FOR ACCESSING DATA VISITOR DIRECTORY IN MULTI-CORE SYSTEM**
VERFAHREN UND VORRICHTUNG ZUM ZUGREIFEN AUF EIN DATENBESUCHERVERZEICHNIS IN EINEM MEHRKERNSYSTEM
PROCÉDÉ ET DISPOSITIF PERMETTANT D'ACCÉDER À UN RÉPERTOIRE DE VISITEURS DE DONNÉES DANS UN SYSTÈME MULTI-COEURS

(43) Date of publication of application: 29.11.2017
(73) Proprietor: Huawei Technologies Co., Ltd., Shenzhen, Guangdong 518129 (CN)
(72) Inventor: GU, Xiongli, Shenzhen Guangdong 518129 (CN); FANG, Lei, Shenzhen Guangdong 518129 (CN); CAI, Weiguang, Shenzhen Guangdong 518129 (CN); LIU, Peng, Shenzhen Guangdong 518129 (CN)
(74) Representative: Kreuz, Georg Maria
(86) International application number: PCT/CN2015/073192
(87) International publication number: WO 2016/131175

(56) References cited:
- CN-A- 101 859 281
- CN-A- 104 133 785
- US-A1- 2011 138 128
- US-A1- 2014 032 848
- US-A1- 2014 229 680
- YUVAL TAMIR ET AL: "HIERARCHICAL COHERENCY MANAGEMENT FOR SHARED VIRTUAL MEMORY MULTICOMPUTERS*", JOURNAL OF PARALLEL AND DISTRIBUTED COMPUTING, ELSEVIER, AMSTERDAM, NL, vol. 15, no. 4, 1 August 1992 (1992-08-01) , pages 408-419, XP000293513, ISSN: 0743-7315, DOI: 10.1016/0743-7315(92)90053-P
- None

## Description

### TECHNICAL FIELD

The present invention relates to the field of information technologies, and more specifically, to a method for accessing a data visitor directory in a multi-core system, a directory cache device, a multi-core system, and a directory storage unit.

### BACKGROUND

In application of a multi-core (Multi-Core) processor or a many-core (Many Core) processor, there is some scenarios in which a data block is accessed by one or more processor cores in the processor. In this scenario, the data block is usually stored in shared storage space, so as to be accessed by the one or more processor cores. To accelerate access to the data block, a copy of the data block is created in private caches in one or more processor cores that have accessed the data block (that is, the data block is stored in the private cache in the processor core). In this way, when a core that has accessed the data block needs to access the data block again, the core only needs to read the data block in the private cache of the core. Since the copy of the data block is stored in the private caches that are in the one or more processor cores and that have been accessed, coherence of copies of the data block that are in private caches in multiple cores needs to be maintained, so as to resolve a coherence problem of the copies, which is referred to as a cache coherence (Cache Coherence) problem. A basic principle of resolving the cache coherence problem is: When a copy of the data block in a core is changed, copies of the data block in other cores need to be updated, or the data block needs to be invalidated (that is, the data block is deleted). Therefore, a core in the multi-core processor that stores a copy of the data block needs to be determined (that is, a visitor of the data block is determined).

A commonly used cache coherence solution includes a snooping-based coherence solution and a directory-based coherence solution. Regarding the former, when a copy of a data block in a core is changed, a broadcast message indicating that the data block has been changed needs to be sent to other cores in which copies of the data block are stored, so as to instruct these cores to update the copies of the data block or invalidate the data block. Regarding the latter, an access directory of a data block is used to record a visitor (that is, a core, in which the data block is stored, in a multi-core processor) list of the data block. When a copy of the data block in a core is changed, a notification message indicating that the data block has been changed is sent only to the other visitors. As a quantity of processor cores increases continuously, the snooping-based coherence solution faces performance and bandwidth bottlenecks (message broadcasting needs to occupy a large quantity of processing resources and a large amount of bandwidth), while a directory-based coherence protocol is widely applied by virtue of its better scalability.

In a conventional directory-based coherence solution, a visitor list of a data block is recorded in a directory in a form of vector. For a multi-core processor system including N cores, each directory entry in the directory includes one N-bit vector, and whether each bit in the vector is 1 indicates whether there is a copy of a data block in the N cores. In this mechanism, a quantity of directory entries grows linearly with an increase in a quantity of cores, but a size of a cache that is used to store a copy of a data block does not grow with the increase in the quantity of cores. As a result, a ratio of a quantity of bits occupied by the directory to a quantity of bits occupied by the data block grows with the increase in the quantity of cores. Consequently, storage space used to store a directory gets larger, which brings a challenge to cache space in an on-chip multi-core processor. Document US 2014/0032848 A1 discloses a method for realizing sharing pattern-based directory coherence for multicore scalability.

### SUMMARY

Present invention provides a method for accessing a data visitor directory in a multi-core system, a directory cache device, a multi-core system, and a directory storage unit, which can reduce storage resources occupied by a data visitor directory. The invention is defined by the independent claims. The dependent claims define advantageous embodiments.

Based on the foregoing technical solutions, in present invention, a directory structure including a single-pointer entry array and a sharing entry array is used. When a data block only has a single visitor, only a single-pointer entry is used to record information about the visitor. When the data block has multiple visitors, information about the visitors is recorded in a manner of associating a single-pointer entry with a sharing entry. In the foregoing manner, an average size of a directory entry in a directory can be relatively greatly compressed and a performance loss is relatively small. Therefore, storage resources occupied by the directory can be reduced and system scalability can be improved.

### BRIEF DESCRIPTION OF DRAWINGS

To describe the technical solutions of the present invention more clearly, in the following the accompanying drawings are briefly introduced describing embodiments of the present invention and the prior art. Apparently, the accompanying drawings in the following description show merely some embodiments of the present invention.
FIG. 1 is a schematic diagram of a multi-core system to which the technical solutions in the embodiments of the present invention may be applied;
FIG. 2 is a schematic diagram of a directory according to an embodiment of the present invention;
FIG. 3 is a schematic diagram of a single-pointer entry according to an embodiment of the present invention;
FIG. 4 is a schematic diagram of a sharing entry according to an embodiment of the present invention;
FIG. 5 is a schematic diagram of a directory according to another embodiment of the present invention;
FIG. 6 is a schematic flowchart of a directory access method according to an embodiment of the present invention;
FIG. 7a is a schematic flowchart of a directory access method according to another embodiment of the present invention;
FIG. 7b is a schematic flowchart of a directory access method according to still another embodiment of the present invention;
FIG. 8 is a schematic flowchart of a directory access method according to still another embodiment of the present invention;
FIG. 9a is a schematic flowchart of a directory access method according to still another embodiment of the present invention;
FIG. 9b is a schematic diagram of compressing a sharing entry according to an embodiment of the present invention;
FIG. 10 is a schematic block diagram of a directory cache device according to an embodiment of the present invention; and
FIG. 11 is a schematic diagram of a multi-core system according to an embodiment of the present invention.

### DESCRIPTION OF EMBODIMENTS

The following clearly and completely describes the technical solutions of the present invention with reference to the accompanying drawings showing embodiments of the present invention. Apparently, the described embodiments are a part rather than all of the embodiments of the present invention.

Throughout this specification, a term "multi-core processor system" or "multi-core system" refers to a processing system including multiple processor cores (Core). The system may be presented as an on-chip multi-core processor or an on-board multi-core processing system. The on-chip multi-core processor is a processor (Processor) in which multiple processor cores (Core) are integrated on one chip (Chip). The on-board multi-core processing system refers to a processing system that is formed by separately packaging each core of multiple processor cores into a processor and integrating the processors on a circuit board.

A core (Core) is also referred to as a kernel and is a most important component of a CPU (Central Processing Unit). The core is made of monocrystalline silicon by using a particular production process. All of computation, command receiving/storage, and data processing in the CPU are executed by a processor core. The term "multiple processor cores" means that at least two processor cores are included. The "multiple processor cores" cover a scope of multi-core (Multi-Core) and many-core (Many Core) applications in the prior art.

Throughout this specification, a term "directory cache", also referred to as "directory cache device", refers to a storage device used to store a data visitor directory in a multi-core system. To increase a directory access rate, the storage device is usually implemented in a form of cache (Cache). The directory cache is implemented in at least two implementation manners. In one manner, the directory cache is implemented independently of a processor core, that is, a piece of storage space in a cache (Cache) on an on-chip multi-core processing chip is allocated, so as to be used as a cache for directory storage. In another manner, the directory cache is implemented in a distributed manner, that is, a directory is divided into several blocks, and the directory blocks are separately stored in a cache inside each processor core on an on-chip multi-core processing chip.

Throughout this specification, a term "shared data cache" refers to a storage device used to store a data block shared by multiple cores. To increase a data block access rate, the storage device is usually implemented in a form of cache (Cache). In a specific implementation process, the shared data cache generally refers to a level 2 (L2) cache or a level 3 (L3) cache in a multi-core processor system.

Throughout this specification, a term "private data cache" refers to a storage device, inside a processor core, used to store private data of the processor core. In a specific implementation process, the private data cache generally refers to a level 1 (L1) cache in a multi-core processor. In implementation of a multi-core processor, to improve efficiency for the processor core to access a data block, the processor core may obtain a part of shared data and store this part of shared data into the private data cache.

Throughout this specification, a term "data block" refers to a granularity at which each processor core accesses data in a multi-core processor system. In specific implementation, the data block is stored in a shared data cache in the multi-core processor system. Therefore, in a general case, a granularity of the data block is a cache line (that is, cache line). In specific implementation, the granularity of the data block may be presented in another form, such as a part of a cache line, or multiple cache lines. Details are not limited in this specification.

Throughout this specification, a term "directory", also referred to as a "directory structure" or a "data visitor directory", refers to a data structure in which information about a visitor of a data block is recorded. The data visitor directory includes a single-pointer entry array and a sharing entry array. The single-pointer entry array includes multiple single-pointer entries. The sharing entry array includes multiple sharing entries. Content recorded in each single-pointer entry varies according to a quantity of visitors of a data block. When the data block has a single visitor, information about the single visitor of the data block is recorded in the single-pointer entry. When the data block has multiple visitors, the single-pointer entry is also used to record information about an association between the single-pointer entry and a sharing entry corresponding to the single-pointer entry. When the data block has multiple (two or more) visitors, the sharing entry is used to record information about the multiple visitors of the data block. The term "data visitor directory" includes one or more data visitor directory entries.

Throughout this specification, a term "data visitor directory entry" refers to a constituent unit of a "data visitor directory". Each entry in the directory is corresponding to each data block in a shared data cache. In specific implementation, the data visitor directory includes a single-pointer entry array and a sharing entry array. Therefore, when a data block has only one data visitor, a data visitor directory entry corresponding to the data block refers to a single-pointer entry in which information about the single visitor of the data block is recorded. When a data block has multiple (two or more) visitors, a data visitor directory entry corresponding to the data block refers to a single-pointer entry in which information about an association between the single-pointer entry and a sharing entry corresponding to the single-pointer entry is recorded, and a sharing entry in which information about the multiple visitors of the data block is recorded.

Throughout this specification, a term "visitor" refers to a processor core that accesses a data block. For example, when a data block is accessed by three processor cores, the three processor cores are referred to as visitors of the data block.

Throughout this specification, a term "access request" refers to a directory access request that is sent by a processor core and that is a request used to query for information about a visitor of a data block.

Throughout this specification, a term "information about an association" refers to that when a data block has at least two visitors, in a single-pointer entry corresponding to the data block, an access index of a sharing entry corresponding to the single-pointer entry is recorded. The access index is referred to as information about an association between the single-pointer entry of the data block and the sharing entry corresponding to the single-pointer entry. The information about the association indicates that an association relationship exists between the single-pointer entry of the data block and the sharing entry corresponding to the single-pointer entry.

Throughout this specification, a term "principle of least recently used (Least Recently Used, LRU)" refers to that when an entry (a single-pointer entry or a sharing entry) is to be allocated to a data block, the principle is used to select, from a single-pointer entry array or a sharing entry array, an entry that is least accessed in a recent period, so as to be used as an entry of the data block.

Throughout this specification, a term "invalidation message" refers to that during entry re-allocation, an invalidation message is sent to a visitor originally recorded in an entry, so as to invalidate an original data block.

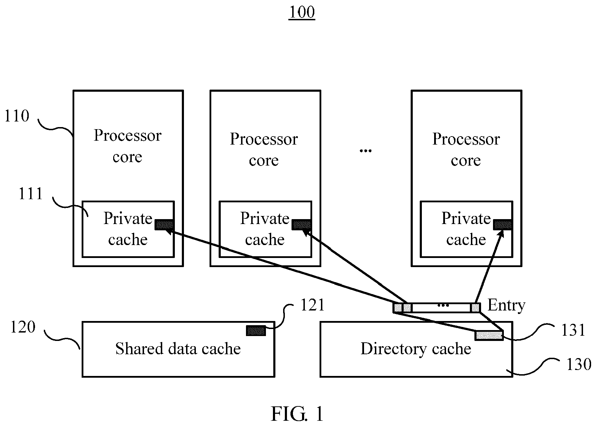

FIG. 1 is a schematic diagram of a multi-core system to which the technical solutions in the embodiments of the present invention may be applied.

As shown in FIG. 1, a multi-core system 100 includes multiple processor cores 110, a shared data cache 120, and a directory cache 130. The multiple processor cores 110 may access a data block 121 in the shared data cache 120. A copy of the data block 121 is created in a private cache 111 in the processor core 110 that has accessed the data block 121. In the directory cache 130, a corresponding directory entry 131 is used to record, for the data block 121, a visitor list of the data block 121.

In other words, the data block 121 in the shared data cache 120 may be copied to at least one processor core of the multiple processor cores 110. A visitor of the data block 121 is a processor core in which the copy of the data block 121 is stored.

A directory is a structure in which a visitor list is recorded. Based on this, the directory may also be expressed as a directory structure.

The directory is stored in the directory cache 130, and specifically, may be stored in a directory storage unit in the directory cache 130.

The directory cache may be centralized or may be distributed. Correspondingly, the directory may be a centralized directory, that is, a cache area is set in a multi-core system (for example, a multi-core processor chip) to store the directory. The directory may also be a distributed directory, that is, the directory is divided into blocks, and each directory part obtained after block division is stored in each processor core. For example, assuming that the multi-core system includes 128 processor cores, a directory may be divided into 128 parts that are stored in the 128 processor cores respectively.

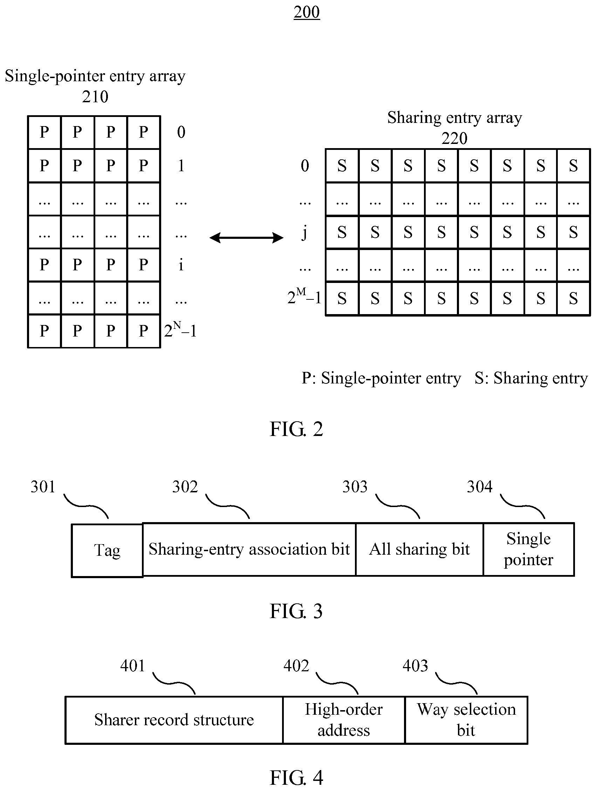

FIG. 2 is a schematic diagram of a directory 200 according to an embodiment of the present invention.

As shown in FIG. 2, the directory 200 includes a single-pointer entry array 210 and a sharing entry array 220.

The single-pointer entry array 210 includes multiple single-pointer entries, and the sharing entry array 220 includes multiple sharing entries.

A single-pointer entry in the single-pointer entry array 210 is used to record information about a single visitor of a data block, or record information about an association between the single-pointer entry and a sharing entry in the sharing entry array 220. That is, the single-pointer entry may record the information about the single visitor of the data block when the data block has the single visitor, or record the information about the association between the single-pointer entry and the sharing entry in the sharing entry array 220 when the data block has multiple visitors. The sharing entry is used to record information about the multiple visitors of the data block.

In a scale-out (scale-out) application, most data has only one visitor. The data may be private data or show a private feature within a time period. Based on this, most directory entries only need to record information about a processor core, for example, a number of the processor core, by using a single pointer, and the directory entry is referred to as a single-pointer entry in the present invention. In addition, to track data that has multiple visitors, some directory entries still use a hardware structure (for example, a vector, a limited pointer, or another form) that can be used to track multiple visitors, and the directory entry is referred to as a sharing entry in the present invention. All single-pointer entries constitute a single-pointer entry array, and all sharing entries constitute a sharing entry array. There may be a relatively large quantity of entries in the single-pointer entry array, and a relatively small quantity of entries in the sharing entry array.

The single-pointer entry may use relatively few bits (bit) to record a visitor. The sharing entry may use relatively many bits to record multiple visitors. When a data block has a single visitor, only a single-pointer entry is used to record the single visitor of the data block. In this case, the single-pointer entry is unassociated with a sharing entry. When a data block has multiple visitors, a single-pointer entry corresponding to the data block is associated with a sharing entry, and the associated sharing entry is used to record the multiple visitors of the data block.

Optionally, to reduce storage space occupied by the sharing entry, an all sharing bit may be further set in the single-pointer entry. When the sharing bit is set to 1, the data block is shared by all processor cores in a multi-core system. In this case, the single-pointer entry is unassociated with the sharing entry. That is, when the data block is shared by all the processor cores, only the single-pointer entry also needs to be used, and the sharing entry does not need to be associated.

The directory according to this embodiment of the present invention uses a structure including a single-pointer entry array and a sharing entry array. When there is a single visitor, only a single-pointer entry is used to record information about the visitor; when there are multiple visitors, information about the visitors is recorded in a manner of associating a single-pointer entry with a sharing entry. In the foregoing manner, an average size of a directory entry in the directory can be greatly compressed and a performance loss is very small. Therefore, storage resources occupied by the directory can be reduced and system scalability can be improved.

FIG. 3 is a schematic diagram of a single-pointer entry according to an embodiment of the present invention. As shown in FIG. 3, the single-pointer entry may include a tag 301, a sharing-entry association bit 302, an all sharing bit 303, and a single pointer 304.

The tag 301 is used to correspond to a data block. For example, a tag may correspond to an address of a data block, and specifically may correspond to some address bits of the data block. Therefore, a single-pointer entry corresponding to the data block may be searched for according to a correspondence between the address of the data block and the tag.

The sharing-entry association bit 302 is used to indicate whether the single-pointer entry is associated with a sharing entry. For example, a value of the sharing-entry association bit being 1 indicates that there is a sharing entry associated with the single-pointer entry; a value being 0 indicates that there is no sharing entry associated with the single-pointer entry.

The all sharing bit 303 is used to indicate that a data block is shared by all processor cores or indicate that a data block has a single visitor. For example, when a value of the all sharing bit 303 is 1, the data block is shared by all the processor cores; when the sharing-entry association bit is 0, that is, a sharing entry is unassociated, and the all sharing bit is also 0, the data block has the single visitor.

The single pointer 304 is used to record information about a single visitor of a data block when the data block has the single visitor. When there are multiple visitors, the single pointer 304 is used to record information about an association between the single-pointer entry and a sharing entry, to point to the sharing entry. The information about the single visitor may be represented as an identifier of the visitor; in an example, a number of the visitor (a processor core) or other identifier information may be used. The information about the association between the single-pointer entry and the sharing entry may be represented as a pointer or index information. Details thereof are not limited in this embodiment of the present invention.

For example, when the sharing-entry association bit is 0, that is, no sharing entry is associated, and the all sharing bit is 0, that is, there is a single visitor, the single visitor of the data block is recorded in the single pointer; when the sharing-entry association bit is 1, that is, a sharing entry is associated, information about an association with the sharing entry is recorded in the single pointer 304. The information about the association is used to point to the sharing entry associated with the single-pointer entry.

FIG. 4 is a schematic diagram of a sharing entry according to an embodiment of the present invention. As shown in FIG. 4, the sharing entry may include a sharer record structure 401, a high-order address 402, and a way selection bit 403. The high-order address 402 and the way selection bit 403 are an association structure indicating information about an association.

The sharer record structure 401 is used to record information about multiple visitors of a data block. The sharer record structure may be a vector or another structure in which the multiple visitors can be recorded.

The association structure (the high-order address 402 and the way selection bit 403) is used to point to a single-pointer entry.

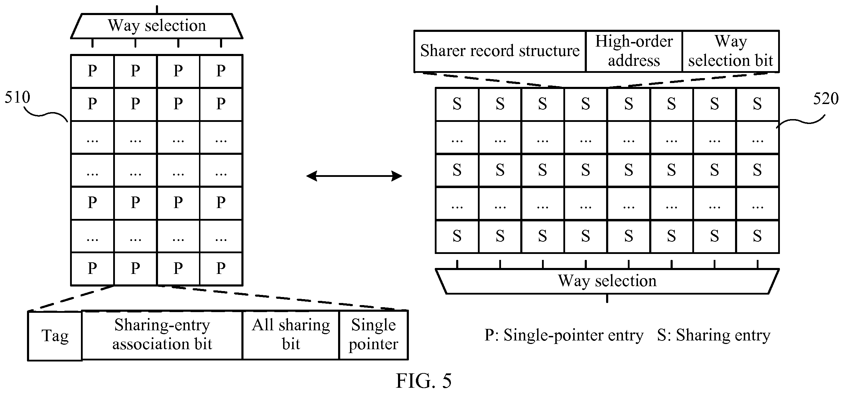

There are relatively many cases in which a data block has a single visitor and relatively a few cases in which a data block has multiple visitors. Therefore, in this embodiment of the present invention, a single-pointer entry array is used as a primary array, and a sharing entry array is used as a secondary array. As shown in FIG. 5, a single-pointer entry array 510 and a sharing entry array 520 each use a set-associative structure similar to that of a cache. A quantity of sets (each row of an array is a set) is referred to as a depth. A quantity of ways (each column of an array is a way) is referred to as a correlation. The single-pointer entry array has a relatively large depth but a moderate correlation, so as to reduce access power consumption. The sharing entry array has a relatively small depth but a relatively large correlation, so as to improve utilization of a sharing entry. During directory access, the single-pointer entry array is searched according to address information in an access request, for example, a tag of a single-pointer entry is searched for to determine whether there is the single-pointer entry. Subsequently, accessing a sharing entry according to a single-pointer entry and accessing a single-pointer entry according to a sharing entry may be implemented in a manner of "a number of a set plus a number of a way", and in specific implementation, may be implemented by first determining a number of a set and then determining a number of a way.

It should be noted that in all fields of the foregoing single-pointer entry, the all sharing bit 303 is an optional field. When a data block is shared by all processor cores in a multi-core system, the sharer record structure 401 in the sharing entry may be used to indicate that the data block is shared by all the processor cores. To reduce storage space of the sharing entry, the all sharing bit 303 is added to the single-pointer entry. The all sharing bit 303 is set to 1, to indicate a sharing scenario in which "a data block is shared by all processor cores in a multi-core system".

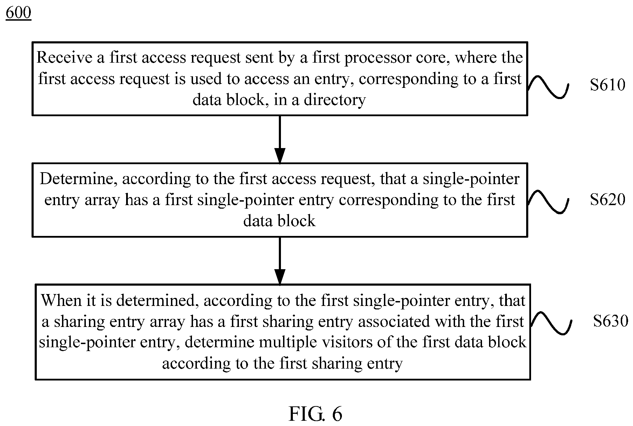

FIG. 6 is a schematic flowchart of a method 600 for accessing a data visitor directory in a multi-core system according to an embodiment of the present invention. The directory is the directory in the foregoing embodiment of the present invention. The method 600 may be executed by a directory cache.

S610. Receive a first access request sent by a first processor core, where the first access request is used to access an entry, corresponding to a first data block, in the directory.

The first access request may carry address information of the data block. The directory may be accessed according to the address information in the access request, and the entry corresponding to the data block is searched for in the directory.

S620. Determine, according to the first access request, that a single-pointer entry array has a first single-pointer entry corresponding to the first data block.

When the first access request is received, the single-pointer entry array is first accessed, to determine whether there is a single-pointer entry corresponding to the data block. Specifically, the single-pointer entry array may be searched according to the address information in the access request, to determine whether there is a single-pointer entry corresponding to the data block. For example, using the structure of the single-pointer entry shown in FIG. 3 as an example, the address information carried in the access request may be compared with a tag in the single-pointer entry, to determine whether there is a single-pointer entry corresponding to the data block. In this embodiment, the single-pointer entry array has the first single-pointer entry corresponding to the first data block.

S630. When it is determined, according to the first single-pointer entry, that a sharing entry array has a first sharing entry associated with the first single-pointer entry, determine multiple visitors of the first data block according to the first sharing entry.

When the data block (which is represented as the first data block) has a corresponding single-pointer entry (which is represented as the first single-pointer entry), whether the sharing entry array has a sharing entry associated with the first single-pointer entry is determined according to the first single-pointer entry. For example, using the structure of the single-pointer entry shown in FIG. 3 as an example, whether there is a sharing entry associated with the single-pointer entry may be determined according to a sharing-entry association bit in the single-pointer entry. When there is a sharing entry associated with the first single-pointer entry, that is, the first single-pointer entry is associated with the sharing entry (which is represented as the first sharing entry), the multiple visitors of the first data block are determined according to the first sharing entry. Specifically, the associated sharing entry may be determined according to information about an association recorded in the single-pointer entry, for example, the information about the association recorded in the single pointer in the structure shown in FIG. 3, and the sharing entry is accessed to obtain the multiple visitors of the data block from the sharing entry.

Using the structure of the directory shown in FIG. 5 as an example, the sharing entry may be accessed according to the single-pointer entry in the following manner.

1. A low-order bit is extracted from a number of a set to which the single-pointer entry belongs, to obtain a set number of the sharing entry.

There is a relatively large quantity of sets in the single-pointer entry array, and a relatively small quantity of sets in the sharing entry array. Therefore, the set number of the sharing entry may be determined according to the low-order bit of the set number of the single-pointer entry.

It is assumed that the single-pointer entry array includes four ways and 64 sets and the sharing entry array includes eight ways and 16 sets.

If a sharing-entry association bit of the currently accessed single-pointer entry is 1, the sharing entry is associated and the sharing entry array needs to be accessed. A number of a set in the 64-set single-pointer entry array includes 6 bits (bit), the single-pointer entry belongs to a 55^{th} set, and the number of the set is represented as b_110111 (b_ represents binary). The sharing entry array includes a total of 16 sets and a set number having four bits is required for indexing. Lower four bits b_0111 are extracted from b_110111, to obtain that the corresponding sharing entry belongs to a 7^{th} set in the sharing entry array.

2. The sharing entry array is accessed, to read multiple ways of sharing entries that are in one set.

The 7^{th} set in the sharing entry array is accessed according to the set number obtained in the previous step, to obtain eight sharing entries (eight ways) in the set.

3. Way selection is performed on the multiple ways of sharing entries according to a single pointer in the single-pointer entry.

Selection from the eight ways needs 3 bits. Assuming that a value of the single pointer is b_1100, lower three bits b_100 in the value of the single pointer, that is, a 4^{th} way, may be used, so as to obtain the associated sharing entry.

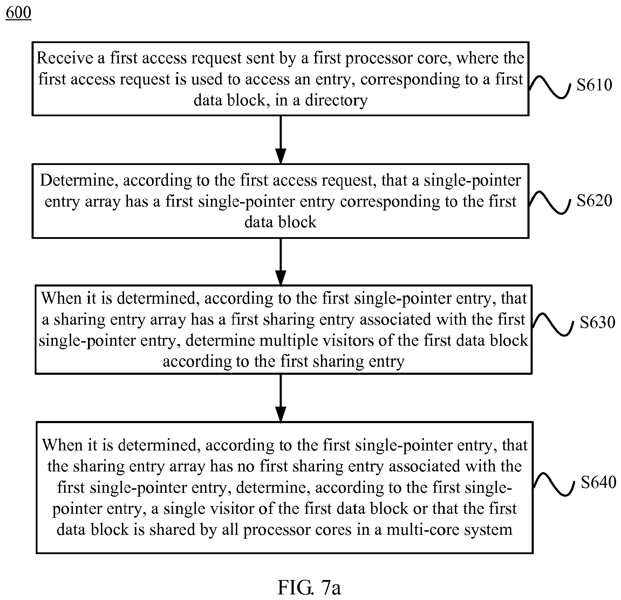

In this embodiment of the present invention, optionally, as shown in FIG. 7a, the method 600 may further include:

S640. When it is determined, according to the first single-pointer entry, that the sharing entry array has no first sharing entry associated with the first single-pointer entry, determine, according to the first single-pointer entry, a single visitor of the first data block or that the first data block is shared by all processor cores in a multi-core system.

That is, when the first single-pointer entry is unassociated with the first sharing entry, a visitor of the first data block is determined only according to the first single-pointer entry. Specifically, the first single-pointer entry may be used to record the single visitor of the first data block or to indicate that the first data block is shared by all the processor cores in the multi-core system. In both of the two cases, no sharing entry needs to be associated, and relatively a few bits may be used for representation. For a specific example, refer to the foregoing embodiment, and details are not described herein again.

In the directory access method according to this embodiment of the present invention, a single-pointer entry is first accessed; when the single-pointer entry is associated with a sharing entry, the associated sharing entry is then accessed; when a data block has a single visitor, the single visitor may be obtained from the single-pointer entry; and when the data block has multiple visitors, the multiple visitors may be obtained from the sharing entry associated with the single-pointer entry. In this way, an average size of a directory entry in a directory can be greatly compressed and a performance loss is relatively very small. Therefore, storage resources occupied by the directory can be reduced and system scalability can be improved.

In this embodiment of the present invention, when the single-pointer entry array has no single-pointer entry corresponding to the data block, a corresponding single-pointer entry may be further allocated to the data block.

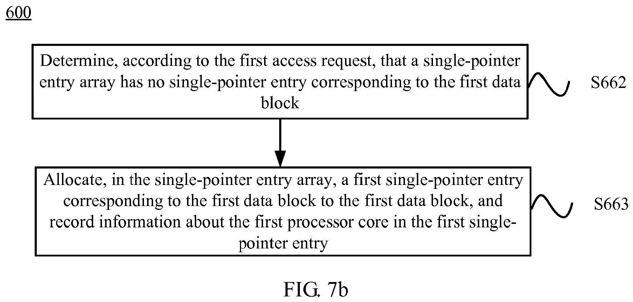

Therefore, after the first access request sent by the first processor core is received, as shown in FIG. 7b, the method 600 further includes:
S662. Determine, according to the first access request, that the single-pointer entry array has no single-pointer entry corresponding to the first data block.
S663. Allocate, in the single-pointer entry array, the first single-pointer entry corresponding to the first data block to the first data block, and record information about the first processor core in the first single-pointer entry.

That is, when the data block has no corresponding single-pointer entry, a single-pointer entry may be allocated to the data block, and information about the single visitor (that is, the first processor core) is recorded in the allocated single-pointer entry.

Specifically, if the single-pointer entry array has an unused single-pointer entry, a single-pointer entry is selected from the unused single-pointer entry as the first single-pointer entry, and the information about the first processor core is recorded.

If the single-pointer entry array has no unused single-pointer entry, a single-pointer entry is selected according to a principle of least recently used.

If the selected single-pointer entry is unassociated with a sharing entry and records information about the single visitor, an invalidation message is sent to the recorded single visitor, and the information about the first processor core is recorded in the selected single-pointer entry.

If the selected single-pointer entry is unassociated with a sharing entry and indicates that the data block is shared by all the processor cores in the multi-core system, an invalidation message is broadcast to all the processor cores, and the information about the first processor core is recorded in the selected single-pointer entry.

If the selected single-pointer entry is associated with a sharing entry, the multiple visitors recorded in the associated sharing entry are determined according to the sharing entry associated with the selected single-pointer entry, an invalidation message is sent to the recorded multiple visitors, and the information about the first processor core is recorded in the selected single-pointer entry.

The following describes in detail the directory access method according to this embodiment of the present invention by using an example.

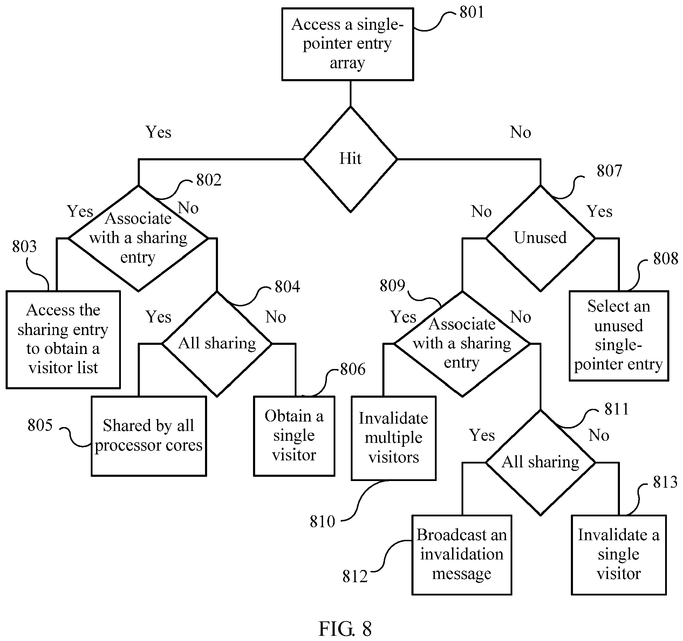

FIG. 8 is a schematic flowchart of a directory access method according to another embodiment of the present invention.

801. Access a single-pointer entry array; and if a single-pointer entry is hit, step 802 is performed; or if no single-pointer entry is hit, step 807 is performed.

For example, when the single-pointer entry and a sharing entry use the structures shown in FIG. 3 and FIG. 4 respectively, address information carried in an access request may be compared with a tag in the single-pointer entry, to determine whether there is a single-pointer entry corresponding to a data block.

802. Determine whether the single-pointer entry is associated with a sharing entry; and if yes, 803 is performed; or if not, 804 is performed.

For example, whether the single-pointer entry is associated with a sharing entry may be determined according to a sharing-entry association bit in the hit single-pointer entry. If the sharing-entry association bit is 1, the sharing entry is associated; if the sharing-entry association bit is 0, the sharing entry is unassociated.

803. Access the associated sharing entry to obtain a visitor list.

For example, the associated sharing entry may be found according to a single pointer in the single-pointer entry, so as to obtain the visitor list from a sharer record structure in the associated sharing entry.

804. Determine whether all sharing is implemented; and if yes, 805 is performed; or if not, 806 is performed.

When the sharing entry is unassociated, whether the data block is shared by all processor cores is determined. For example, whether all sharing is implemented may be determined according to an all sharing bit in the single-pointer entry. If the all sharing bit is 0, the data block has a single visitor, that is, all sharing is not implemented. If the all sharing bit is 1, the data block is shared by all the processor cores, that is, all sharing is implemented.

805. Determine that a data block is shared by all processor cores.

806. Obtain a single visitor.

For example, the single visitor may be obtained from the single pointer in the single-pointer entry.

807. Determine whether there is an unused single-pointer entry; and if yes, 808 is performed; or if not, 809 is performed.

808. Select the unused single-pointer entry and record information about an accessing processor core.

For example, an identifier of the processor core may be recorded. Using 64 cores as an example, a 6-bit identifier may be used.

809. Select a single-pointer entry that is least recently used; determine whether the selected single-pointer entry is associated with a sharing entry; and if yes, 810 is performed; or if not, 811 is performed.

810. Invalidate multiple visitors and record information about an accessing processor core.

The multiple visitors recorded in the associated sharing entry are determined according to the associated sharing entry. An invalidation message is sent to the multiple visitors, and the information about the accessing processor core is recorded in the selected single-pointer entry.

811. Determine whether the selected single-pointer entry indicates all sharing; and if yes, 812 is performed; or if not, 813 is performed.

812. Broadcast an invalidation message and record information about an accessing processor core in the selected single-pointer entry.

813. Invalidate a single visitor and record information about an accessing processor core.

The single visitor recorded in the selected single-pointer entry is determined, an invalidation message is sent to the single visitor, and the information about the accessing processor core is recorded in the selected single-pointer entry.

In this embodiment of the present invention, after a single-pointer entry (that is, the first single-pointer entry) is allocated to a data block (the above-mentioned first data block), a single visitor of the first data block (that is, a first processor core) is recorded in the first single-pointer entry. In this case, the first data block is privately owned by the first processor core. When the first data block is accessed by another processor core (which is represented as a second processor core), a sharing entry needs to be allocated in a sharing entry array, and information about multiple visitors (the first processor core and the second processor core) is recorded by using the sharing entry.

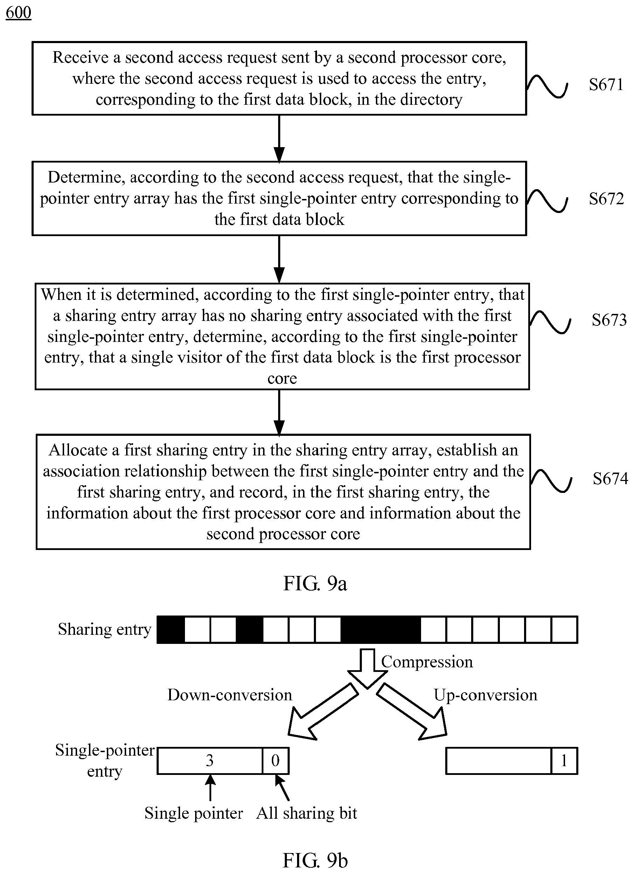

Therefore, as shown in FIG. 9a, the method 600 further includes:
S671. Receive a second access request sent by a second processor core, where the second access request is used to access the entry, corresponding to the first data block, in the directory.
S672. Determine, according to the second access request, that the single-pointer entry array has the first single-pointer entry corresponding to the first data block.
S673. When it is determined, according to the first single-pointer entry, that the sharing entry array has no sharing entry associated with the first single-pointer entry, determine, according to the first single-pointer entry, that the single visitor of the first data block is the first processor core.
S674. Allocate the first sharing entry in the sharing entry array, establish an association relationship between the first single-pointer entry and the first sharing entry, and record, in the first sharing entry, the information about the first processor core and information about the second processor core.

Specifically, when the first sharing entry is to be allocated, if the sharing entry array has an unused sharing entry, a sharing entry is selected from the unused sharing entry as the first sharing entry.

If the sharing entry array has no unused sharing entry and has a sharing entry that records information about only one visitor, the sharing entry that records the information about the only one visitor is selected, and the recorded information about the visitor is written to a single-pointer entry associated with the selected sharing entry.

If the sharing entry array has neither an unused sharing entry nor a sharing entry that records information about only one visitor, a sharing entry is selected according to the principle of least recently used. If a quantity of visitors recorded in the selected sharing entry is greater than a predetermined threshold, a single-pointer entry associated with the selected sharing entry is set to indicate that the data block is shared by all the processor cores in the multi-core system. If a quantity of visitors recorded in the selected sharing entry is not greater than a predetermined threshold, information about one visitor of the recorded visitors is written to a single-pointer entry associated with the selected sharing entry, and an invalidation message is sent to the other visitors of the recorded visitors.

That is, when a sharing entry is to be allocated, an unused sharing entry is preferentially used. If there is no unused sharing entry, a used sharing entry needs to be taken back, and a sharing entry that records only one visitor is preferentially selected. If there is no sharing entry that records only one visitor, a sharing entry that is least recently used is selected. When the sharing entry that records the only one visitor is taken back, the single visitor needs to be written to an associated single-pointer entry, which avoids a visitor information loss. When a sharing entry that records multiple visitors is taken back, a sharing list may be compressed in different manners according to a quantity of visitors and may be stored in an associated single-pointer entry. Specifically, if the quantity of visitors is greater than the predetermined threshold, the associated single-pointer entry is set to indicate that the data block is shared by all the processor cores, which may be referred to as up-conversion. If the quantity of visitors is not greater than the predetermined threshold, one visitor of the visitors is written to the associated single-pointer entry, and the invalidation message is sent to the other visitors, that is, only one visitor is kept, which may be referred to as down-conversion.

For example, as shown in FIG. 9b, when up-conversion is performed, an all sharing bit in the associated single-pointer entry is set to 1, indicating that the data block is shared by all the processor cores. When down-conversion is performed, only one visitor (number 3 visitor shown in FIG. 9b) is kept, and the visitor is recorded in the associated single-pointer entry.

The sharing entry that is taken back may be allocated to another data block. That is, in this embodiment of the present invention, a sharing entry may be dynamically allocated according to a change in data sharing. In this way, a directory resource is utilized more flexibly, and utilization of the directory resource can be improved.

When a sharing entry is taken back, a single-pointer entry needs to be accessed according to the sharing entry. In this case, the associated single-pointer entry may be determined according to the sharing entry. Specifically, the associated single-pointer entry may be determined according to an association structure in the sharing entry.

Using the directory structure shown in FIG. 5 as an example, the single-pointer entry may be accessed according to the sharing entry in the following manner.

1. A number of a set to which the sharing entry belongs and a high-order address are spliced together, to obtain a number of a set in the single-pointer entry array.

There is a relatively large quantity of sets in the single-pointer entry array, and a relatively small quantity of sets in the sharing entry array. Therefore, a set number of the single-pointer entry needs to be obtained by combining the high-order address and the set number of the sharing entry.

It is assumed that the single-pointer entry array includes four ways and 64 sets and the sharing entry array includes eight ways and 16 sets.

Assuming that the sharing entry belongs to a 5^{th} set (b_0101), where the high-order address is b_10, and a way selection bit is b_01, the set number of the corresponding single-pointer entry is obtained by splicing the set number of the sharing entry and the high-order address, and is b_100101, that is, 37.

2. The single-pointer entry array is accessed, to read multiple ways of single-pointer entries in one set.

A 37^{th} set in the single-pointer entry array is accessed according to the set number obtained in the foregoing step, to obtain four single-pointer entries (four ways) in the set.

3. Way selection is performed on the multiple ways of single-pointer entries according to a way selection bit in the sharing entry.

The way selection bit in the sharing entry is used for way selection, and the way selection bit is b_01, that is, the first way, so as to obtain the associated single-pointer entry.

It should be understood that in various embodiments of the present invention, sequence numbers of the foregoing processes do not mean an execution order. The execution order of the processes should be determined by functions and inherent logic of the processes and should not be construed as a limitation on an implementation process of the embodiments of the present invention.

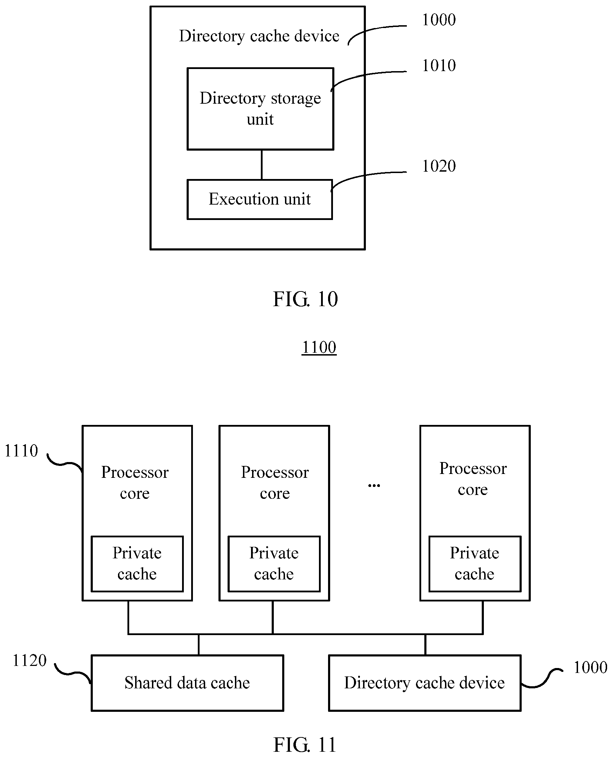

FIG. 10 shows a schematic block diagram of a directory cache device 1000 according to an embodiment of the present invention. As shown in FIG. 10, the directory cache device 1000 includes a directory storage unit 1010 and an execution unit 1020.

The directory storage unit 1010 is configured to store a directory that is in a multi-core system. The multi-core system includes a shared data cache and multiple processor cores. A data block in the shared data cache is copied to at least one processor core of the multiple processor cores. The directory is used to record information about a visitor of the data block in the shared data cache. The visitor of the data block is the processor core in which a copy of the data block is stored. The directory includes a single-pointer entry array and a sharing entry array, where each single-pointer entry in the single-pointer entry array is used to record information about a single visitor of a data block, or record information about an association between the single-pointer entry and a sharing entry in the sharing entry array, and each sharing entry in the sharing entry array is used to record information about multiple visitors of a data block.

The execution unit 1020 is configured to:
receive a first access request sent by a first processor core, where the first access request is used to access an entry, corresponding to a first data block, in the directory;
determine, according to the first access request, that the single-pointer entry array has a first single-pointer entry corresponding to the first data block; and
when determining, according to the first single-pointer entry, that the sharing entry array has a first sharing entry associated with the first single-pointer entry, determine multiple visitors of the first data block according to the first sharing entry.

In the directory cache device according to this embodiment of the present invention, a directory structure including a single-pointer entry array and a sharing entry array is used. When multiple visitors do not need to be recorded, a single-pointer entry is unassociated with a sharing entry. When multiple visitors need to be recorded, a single-pointer entry is associated with a sharing entry. In this way, an average size of a directory entry in a directory can be greatly compressed and a performance loss is relatively very small. Therefore, storage resources occupied by the directory can be reduced and system scalability can be improved.

In this embodiment of the present invention, optionally, the single-pointer entry includes a tag, a sharing-entry association bit, and a single pointer. The tag is used to correspond to the data block. The sharing-entry association bit is used to indicate whether the single-pointer entry is associated with the sharing entry. The single pointer is used to record the information about the single visitor when the data block has the single visitor and to record the information about the association between the single-pointer entry and the sharing entry when the single-pointer entry is associated with the sharing entry.

The sharing entry includes a sharer record structure and an association structure. The sharer record structure is used to record the information about the multiple visitors of the data block, and the association structure is used to associate the single-pointer entry.

In this embodiment of the present invention, optionally, the single-pointer entry further includes an all sharing bit.

The all sharing bit is used to: when the single-pointer entry is unassociated with the sharing entry, indicate that the data block has the single visitor or indicate that the data block is shared by all the processor cores in the multi-core system.

In this embodiment of the present invention, optionally, the single-pointer entry in the single-pointer entry array is further used to indicate that the data block is shared by all the processor cores in the multi-core system, and the execution unit 1020 is further configured to:
when determining, according to the first single-pointer entry, that the sharing entry array has no first sharing entry associated with the first single-pointer entry, determine, according to the first single-pointer entry, a single visitor of the first data block or that the first data block is shared by all the processor cores in the multi-core system.

In this embodiment of the present invention, optionally, after the execution unit 1020 receives the first access request sent by the first processor core, the execution unit 1020 is further configured to:
determine, according to the first access request, that the single-pointer entry array has no single-pointer entry corresponding to the first data block; and
allocate, in the single-pointer entry array, the first single-pointer entry corresponding to the first data block to the first data block, and record information about the first processor core in the first single-pointer entry.

In this embodiment of the present invention, optionally, the execution unit 1020 is configured to:
if the single-pointer entry array has an unused single-pointer entry, select a single-pointer entry from the unused single-pointer entry as the first single-pointer entry, and record the information about the first processor core; or
select a single-pointer entry according to a principle of least recently used if the single-pointer entry array has no unused single-pointer entry; and if the selected single-pointer entry is unassociated with a sharing entry and records information about the single visitor, send an invalidation message to the recorded single visitor and record the information about the first processor core in the selected single-pointer entry; or
if the selected single-pointer entry is unassociated with a sharing entry and indicates that the data block is shared by all the processor cores in the multi-core system, broadcast an invalidation message to all the processor cores and record the information about the first processor core in the selected single-pointer entry; or
if the selected single-pointer entry is associated with a sharing entry, determine, according to the sharing entry associated with the selected single-pointer entry, the multiple visitors recorded in the associated sharing entry, send an invalidation message to the recorded multiple visitors, and record the information about the first processor core in the selected single-pointer entry.

In this embodiment of the present invention, optionally, the execution unit 1020 is further configured to:
receive a second access request sent by a second processor core, where the second access request is used to access the entry, corresponding to the first data block, in the directory;
determine, according to the second access request, that the single-pointer entry array has the first single-pointer entry corresponding to the first data block;
when determining, according to the first single-pointer entry, that the sharing entry array has no sharing entry associated with the first single-pointer entry, determine, according to the first single-pointer entry, that the single visitor of the first data block is the first processor core; and
allocate the first sharing entry in the sharing entry array, establish an association relationship between the first single-pointer entry and the first sharing entry, and record, in the first sharing entry, the information about the first processor core and information about the second processor core.

In this embodiment of the present invention, optionally, the execution unit 1020 is configured to:
if the sharing entry array has an unused sharing entry, select a sharing entry from the unused sharing entry as the first sharing entry; or
if the sharing entry array has no unused sharing entry and has a sharing entry that records information about only one visitor, select the sharing entry that records the information about the only one visitor, and write the recorded information about the visitor to a single-pointer entry associated with the selected sharing entry; or
select a sharing entry according to the principle of least recently used if the sharing entry array has neither an unused sharing entry nor a sharing entry that records only one visitor; and if a quantity of visitors recorded in the selected sharing entry is greater than a predetermined threshold, set a single-pointer entry associated with the selected sharing entry to indicate that the data block is shared by all the processor cores in the multi-core system; or if a quantity of visitors recorded in the selected sharing entry is not greater than a predetermined threshold, write information about one visitor of the recorded visitors to a single-pointer entry associated with the selected sharing entry, and send an invalidation message to the other visitors of the recorded visitors.

In this embodiment of the present invention, the directory stored in the directory storage unit 1010 in the directory cache device 1000 may be the directory according to the foregoing embodiment of the present invention. The execution unit 1020 may perform each process in the foregoing method embodiment. For corresponding specific descriptions, refer to the foregoing embodiments. For brevity, details are not described herein again.

An embodiment of the present invention further provides a multi-core system. As shown in FIG. 11, the multi-core system 1100 includes multiple processor cores 1110, a shared data cache 1120, and the directory cache device 1000 in the foregoing embodiment of the present invention.

Specifically, compared with the multi-core system 100, the multi-core system 1100 in this embodiment of the present invention uses the new directory cache device 1000. The directory cache device 1000 includes a new directory structure provided in this embodiment of the present invention.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the present invention.

## Claims

1. A method for accessing a data visitor directory in a multi-core system, applied to the multi-core system, wherein the multi-core system comprises a shared data cache and multiple processor cores, a data block in the shared data cache is copied to at least one processor core of the multiple processor cores, the multi-core system further comprises the data visitor directory, the directory is used to record information about a visitor of the data block in the shared data cache, and the visitor of the data block is the processor core in which a copy of the data block is stored;
the directory comprises a single-pointer entry array and a sharing entry array, wherein each single-pointer entry in the single-pointer entry array is used to record information about a single visitor of a data block when the data block has a single visitor, and record information about an association between the single-pointer entry and a sharing entry in the sharing entry array when a data block has multiple visitors, and each sharing entry in the sharing entry array is used to record information about multiple visitors of a data block; and
the method comprises:
receiving (S610) a first access request sent by a first processor core, wherein the first access request is used to access an entry, corresponding to a first data block, in the directory;
determining (S620), according to the first access request, that the single-pointer entry array has a first single-pointer entry corresponding to the first data block; and
when determining (S630), according to the first single-pointer entry, that the sharing entry array has a first sharing entry associated with the first single-pointer entry, determining multiple visitors of the first data block according to the first sharing entry;
wherein after receiving (S610) the first access request sent by a first processor core, the method further comprises:
determining (S662), according to the first access request, that the single-pointer entry array has no single-pointer entry corresponding to the first data block; and
allocating (S663), in the single-pointer entry array, the first single-pointer entry corresponding to the first data block to the first data block, and recording information about the first processor core in the first single-pointer entry;
wherein the method further comprises:
receiving (S671) a second access request sent by a second processor core, wherein the second access request is used to access the entry, corresponding to the first data block, in the directory;
determining (S672), according to the second access request, that the single-pointer entry array has the first single-pointer entry corresponding to the first data block;
when determining, according to the first single-pointer entry, that the sharing entry array has no sharing entry associated with the first single-pointer entry, determining (S673), according to the first single-pointer entry, that the single visitor of the first data block is the first processor core; and
allocating (S674) the first sharing entry in the sharing entry array, establishing an association relationship between the first single-pointer entry and the first sharing entry in the first single-point entry, and recording, in the first sharing entry, the information about the first processor core and information about the second processor core.

2. The method according to claim 1, the method further comprises:
when determining, according to the first single-pointer entry, that the sharing entry array has no first sharing entry associated with the first single-pointer entry, determining (S640), according to the first single-pointer entry, a single visitor of the first data block.

3. The method according to claim 1, wherein allocating (S663), in the single-pointer entry array, the first single-pointer entry corresponding to the first data block to the first data block, and recording information about the first processor core in the first single-pointer entry comprises:
if the single-pointer entry array has an unused single-pointer entry, selecting a single-pointer entry from the unused single-pointer entry as the first single-pointer entry, and recording the information about the first processor core; or
selecting a single-pointer entry according to a principle of least recently used if the single-pointer entry array has no unused single-pointer entry; and if the selected single-pointer entry is unassociated with a sharing entry and records information about a single visitor, sending an invalidation message to the recorded single visitor and recording the information about the first processor core in the selected single-pointer entry; or
if the selected single-pointer entry is unassociated with a sharing entry and indicates that the data block is shared by all the processor cores in the multi-core system, broadcasting an invalidation message to all the processor cores and recording the information about the first processor core in the selected single-pointer entry; or
if the selected single-pointer entry is associated with a sharing entry, determining, according to the sharing entry associated with the selected single-pointer entry, the multiple visitors recorded in the associated sharing entry, sending an invalidation message to the recorded multiple visitors, and recording the information about the first processor core in the selected single-pointer entry.

4. The method according to any one of claims 1 to 3, wherein
the single-pointer entry comprises a tag, a sharing-entry association bit, and a single pointer, wherein the tag is used to correspond to the data block, the sharing-entry association bit is used to indicate whether the single-pointer entry is associated with the sharing entry, and the single pointer is used to record the information about the single visitor of the data block when the data block has the single visitor and to record the information about the association between the single-pointer entry and the sharing entry when the single-pointer entry is associated with the sharing entry; and
sharing entry comprises a sharer record structure and an association structure, wherein the sharer record structure is used to record the information about the multiple visitors of the data block, and the association structure is used to associate the single-pointer entry.

5. The method according to claim 4, wherein the single-pointer entry further comprises an all sharing bit; and
the all sharing bit is used to: when the single-pointer entry is unassociated with the sharing entry, indicate that the data block has the single visitor or indicate that the data block is shared by all the processor cores in the multi-core system.

6. A directory cache device, comprising:
a directory storage unit (1010), configured to store a data visitor directory that is in a multi-core system, wherein the multi-core system comprises a shared data cache and multiple processor cores, a data block in the shared data cache is copied to at least one processor core of the multiple processor cores, the directory is used to record information about a visitor of the data block in the shared data cache, and the visitor of the data block is the processor core in which a copy of the data block is stored; and the directory comprises a single-pointer entry array and a sharing entry array, wherein each single-pointer entry in the single-pointer entry array is used to record information about a single visitor of a data block when the data block has a single visitor, and record information about an association between the single-pointer entry and a sharing entry in the sharing entry array when a data block has multiple visitors, and each sharing entry in the sharing entry array is used to record information about multiple visitors of a data block; and
an execution unit (1020), configured to:
receive a first access request sent by a first processor core, wherein the first access request is used to access an entry, corresponding to a first data block, in the directory;
determine, according to the first access request, that the single-pointer entry array has a first single-pointer entry corresponding to the first data block; and
when determining, according to the first single-pointer entry, that the sharing entry array has a first sharing entry associated with the first single-pointer entry, determine multiple visitors of the first data block according to the first sharing entry;
wherein after the execution unit receives the first access request sent by the first processor core, the execution unit is further configured to:
determine, according to the first access request, that the single-pointer entry array has no single-pointer entry corresponding to the first data block; and
allocate, in the single-pointer entry array, the first single-pointer entry corresponding to the first data block to the first data block, and record information about the first processor core in the first single-pointer entry;
wherein the execution unit (1020) is further configured to:
receive a second access request sent by a second processor core, wherein the second access request is used to access the entry, corresponding to the first data block, in the directory;
determine, according to the second access request, that the single-pointer entry array has the first single-pointer entry corresponding to the first data block;
when determining, according to the first single-pointer entry, that the sharing entry array has no sharing entry associated with the first single-pointer entry, determine, according to the first single-pointer entry, that the single visitor of the first data block is the first processor core; and
allocate the first sharing entry in the sharing entry array, establish an association relationship between the first single-pointer entry and the first sharing entry in the first single-point entry, and record, in the first sharing entry, the information about the first processor core and information about the second processor core.

7. The directory cache device according to claim 6, and the execution unit is further configured to:
when determining, according to the first single-pointer entry, that the sharing entry array has no first sharing entry associated with the first single-pointer entry, determine, according to the first single-pointer entry, a single visitor of the first data block.

8. The directory cache device according to claim 6, wherein the execution unit is further configured to:
if the single-pointer entry array has an unused single-pointer entry, select a single-pointer entry from the unused single-pointer entry as the first single-pointer entry, and record the information about the first processor core; or
select a single-pointer entry according to a principle of least recently used if the single-pointer entry array has no unused single-pointer entry; and if the selected single-pointer entry is unassociated with a sharing entry and records information about the single visitor, send an invalidation message to the recorded single visitor and record the information about the first processor core in the selected single-pointer entry; or
if the selected single-pointer entry is unassociated with a sharing entry and indicates that the data block is shared by all the processor cores in the multi-core system, broadcast an invalidation message to all the processor cores and record the information about the first processor core in the selected single-pointer entry; or
if the selected single-pointer entry is associated with a sharing entry, determine, according to the sharing entry associated with the selected single-pointer entry, the multiple visitors recorded in the associated sharing entry, send an invalidation message to the recorded multiple visitors, and record the information about the first processor core in the selected single-pointer entry.

9. The directory cache device according to any one of claims 6 to 8, wherein
the single-pointer entry comprises a tag, a sharing-entry association bit, and a single pointer, wherein the tag is used to correspond to the data block, the sharing-entry association bit is used to indicate whether the single-pointer entry is associated with the sharing entry, and the single pointer is used to record the information about the single visitor of the data block when the data block has the single visitor and to record the information about the association between the single-pointer entry and the sharing entry when the single-pointer entry is associated with the sharing entry; and
the sharing entry comprises a sharer record structure and an association structure, wherein the sharer record structure is used to record the information about the multiple visitors of the data block, and the association structure is used to associate the single-pointer entry.

10. The directory cache device according to claim 9, wherein the single-pointer entry further comprises an all sharing bit; and
the all sharing bit is used to: when the single-pointer entry is unassociated with the sharing entry, indicate that the data block has the single visitor or indicate that the data block is shared by all the processor cores in the multi-core system.

11. A multi-core system, comprising multiple processor cores (1110), a shared data cache (1120), and the directory cache device (1000) according to any one of claims 6 to 10.

## Patentansprüche

1. Verfahren zum Zugreifen auf ein Datenbesucherverzeichnis in einem Mehrkernsystem, das auf das Mehrkernsystem angewendet wird, wobei das Mehrkernsystem einen gemeinsam genutzten Datencache und mehrere Prozessorkerne umfasst, ein Datenblock in dem gemeinsam genutzten Datencache zu mindestens einem Prozessorkern der mehreren Prozessorkerne kopiert wird, das Mehrkernsystem ferner das Datenbesucherverzeichnis umfasst, das Verzeichnis verwendet wird, um Informationen über einen Besucher des Datenblocks in dem gemeinsam genutzten Datencache aufzuzeichnen, und der Besucher des Datenblocks der Prozessorkern ist, in dem eine Kopie des Datenblocks gespeichert ist;
das Verzeichnis ein Einzelzeigereintragsarray und ein gemeinsam genutztes Eintragsarray umfasst, wobei jeder Einzelzeigereintrag in dem Einzelzeigereintragsarray verwendet wird, um Informationen über einen einzelnen Besucher eines Datenblocks aufzuzeichnen, wenn der Datenblock einen einzelnen Besucher aufweist, und Informationen über eine Zuordnung zwischen dem Einzelzeigereintrag und einem gemeinsam genutzten Eintrag in dem gemeinsam genutzten Eintragsarray aufzuzeichnen, wenn ein Datenblock mehrere Besucher aufweist, und jeder gemeinsam genutzte Eintrag in dem gemeinsam genutzten Eintragsarray verwendet wird, um Informationen über mehrere Besucher eines Datenblocks aufzuzeichnen; und
das Verfahren Folgendes umfasst:
Empfangen (S610) einer ersten Zugriffsanforderung, die von einem ersten Prozessorkern gesendet wird, wobei die erste Zugriffsanforderung verwendet wird, um auf einen Eintrag, der einem ersten Datenblock entspricht, in dem Verzeichnis zuzugreifen;
Bestimmen (S620), gemäß der ersten Zugriffsanforderung, dass das Einzelzeigereintragsarray einen ersten Einzelzeigereintrag aufweist, der dem ersten Datenblock entspricht; und
wenn gemäß dem ersten Einzelzeigereintrag bestimmt wird (S630), dass das gemeinsam genutzte Eintragsarray einen ersten gemeinsam genutzten Eintrag aufweist, der dem ersten Einzelzeigereintrag zugeordnet ist, Bestimmen mehrerer Besucher des ersten Datenblocks gemäß dem ersten gemeinsam genutzten Eintrag;
wobei das Verfahren nach dem Empfangen (S610) der ersten Zugriffsanforderung, die von einem ersten Prozessorkern gesendet wird, ferner Folgendes umfasst:
Bestimmen (S662), gemäß der ersten Zugriffsanforderung, dass das Einzelzeigereintragsarray keinen Einzelzeigereintrag aufweist, der dem ersten Datenblock entspricht; und
Zuweisen (S663) des ersten Einzelzeigereintrags, der dem ersten Datenblock entspricht, in dem Einzelzeigereintragsarray, zu dem ersten Datenblock, und Aufzeichnen von Informationen über den ersten Prozessorkern in dem ersten Einzelzeigereintrag;
wobei das Verfahren ferner Folgendes umfasst:
Empfangen (S671) einer zweiten Zugriffsanforderung, die von einem zweiten Prozessorkern gesendet wird, wobei die zweite Zugriffsanforderung verwendet wird, um auf den Eintrag, der dem ersten Datenblock entspricht, in dem Verzeichnis zuzugreifen;
Bestimmen (S672), gemäß der zweiten Zugriffsanforderung, dass das Einzelzeigereintragsarray den ersten Einzelzeigereintrag aufweist, der dem ersten Datenblock entspricht;
wenn gemäß dem ersten Einzelzeigereintrag bestimmt wird, dass das gemeinsam genutzte Eintragsarray keinen dem ersten Einzelzeigereintrag zugeordneten gemeinsam genutzten Eintrag aufweist, Bestimmen (S673), gemäß dem ersten Einzelzeigereintrag, dass der einzelne Besucher des ersten Datenblocks der erste Prozessorkern ist; und
Zuweisen (S674) des ersten gemeinsam genutzten Eintrags in dem gemeinsam genutzten Eintragsarray, Einrichten einer Zuordnungsbeziehung zwischen dem ersten Einzelzeigereintrag und dem ersten gemeinsam genutzten Eintrag in dem ersten Einzelzeigereintrag und Aufzeichnen der Informationen über den ersten Prozessorkern und von Informationen über den zweiten Prozessorkern in dem ersten gemeinsam genutzten Eintrag.

2. Verfahren nach Anspruch 1, wobei das Verfahren ferner Folgendes umfasst:
wenn gemäß dem ersten Einzelzeigereintrag bestimmt wird, dass das gemeinsam genutzte Eintragsarray keinen ersten gemeinsam genutzten Eintrag aufweist, der dem ersten Einzelzeigereintrag zugeordnet ist, Bestimmen (S640), gemäß dem ersten Einzelzeigereintrag, eines einzelnen Besuchers des ersten Datenblocks.

3. Verfahren nach Anspruch 1, wobei das Zuweisen (S663) des ersten Einzelzeigereintrags, der dem ersten Datenblock entspricht, in dem Einzelzeigereintragsarray zu dem ersten Datenblock, und das Aufzeichnen von Informationen über den ersten Prozessorkern in dem ersten Einzelzeigereintrag Folgendes umfasst:
wenn das Einzelzeigereintragsarray einen unbenutzten Einzelzeigereintrag aufweist, Auswählen eines Einzelzeigereintrags aus dem unbenutzten Einzelzeigereintrag als den ersten Einzelzeigereintrag und Aufzeichnen der Informationen über den ersten Prozessorkern; oder
Auswählen eines Einzelzeigereintrags gemäß einem Prinzip des am zuletzt am wenigsten genutzten, wenn das Einzelzeigereintragsarray keinen unbenutzten Einzelzeigereintrag aufweist; und wenn der ausgewählte Einzelzeigereintrag nicht einem gemeinsam genutzten Eintrag zugeordnet ist und Informationen über einen einzelnen Besucher aufzeichnet, Senden einer Ungültigkeitsnachricht an den aufgezeichneten einzelnen Besucher und Aufzeichnen der Informationen über den ersten Prozessorkern in dem ausgewählten Einzelzeigereintrag; oder
wenn der ausgewählte Einzelzeigereintrag nicht einem gemeinsam genutzten Eintrag zugeordnet ist und angibt, dass der Datenblock von allen Prozessorkernen in dem Mehrkernsystem gemeinsam genutzt wird, Ausstrahlen einer Ungültigkeitsnachricht an alle Prozessorkerne und Aufzeichnen der Informationen über den ersten Prozessorkern in dem ausgewählten Einzelzeigereintrag; oder
wenn der ausgewählte Einzelzeigereintrag einem gemeinsam genutzten Eintrag zugeordnet ist, Bestimmen, gemäß dem gemeinsam genutzten Eintrag, der dem ausgewählten Einzelzeigereintrag zugeordnet ist, der mehreren Besucher, die in dem zugeordneten gemeinsam genutzten Eintrag aufgezeichnet sind, Senden einer Ungültigkeitsnachricht an die aufgezeichneten mehreren Besucher und Aufzeichnen der Informationen über den ersten Prozessorkern in dem ausgewählten Einzelzeigereintrag.

4. Verfahren nach einem der Ansprüche 1 bis 3, wobei
der Einzelzeigereintrag ein Tag, ein Zuordnungsbit für den gemeinsam genutzten Eintrag und einen Einzelzeiger umfasst, wobei das Tag verwendet wird, um dem Datenblock zu entsprechen, das Zuordnungsbit für den gemeinsam genutzten Eintrag verwendet wird, um anzugeben, ob der Einzelzeigereintrag dem gemeinsam genutzten Eintrag zugeordnet ist, und der Einzelzeiger verwendet wird, um die Informationen über den einzelnen Besucher des Datenblocks aufzuzeichnen, wenn der Datenblock den einzelnen Besucher aufweist, und um die Informationen über die Zuordnung zwischen dem Einzelzeigereintrag und dem gemeinsam genutzten Eintrag aufzuzeichnen, wenn der Einzelzeigereintrag dem gemeinsam genutzten Eintrag zugeordnet ist; und
gemeinsam genutzter Eintrag eine Aufzeichnungsstruktur für gemeinsame Nutzer und eine Zuordnungsstruktur umfasst, wobei die Aufzeichnungsstruktur für gemeinsame Nutzer verwendet wird, um die Informationen über die mehreren Besucher des Datenblocks aufzuzeichnen, und die Zuordnungsstruktur verwendet wird, um den Einzelzeigereintrag zuzuordnen.

5. Verfahren nach Anspruch 4, wobei der Einzelzeigereintrag ferner ein von allen genutztes Bit umfasst; und
das von allen genutzte Bit verwendet wird, um: wenn der Einzelzeigereintrag nicht dem gemeinsam genutzten Eintrag zugeordnet ist, anzugeben, dass der Datenblock den einzelnen Besucher aufweist oder anzugeben, dass der Datenblock von allen Prozessorkernen im Mehrkernsystem gemeinsam genutzt wird.

6. Verzeichnis-Cache-Vorrichtung, umfassend:
eine Verzeichnisspeichereinheit (1010), die dazu konfiguriert ist, ein Datenbesucherverzeichnis zu speichern, das sich in einem Mehrkernsystem befindet, wobei das Mehrkernsystem einen gemeinsam genutzten Datencache und mehrere Prozessorkerne umfasst, ein Datenblock in dem gemeinsam genutzten Datencache zu mindestens einem Prozessorkern der mehreren Prozessorkerne kopiert wird, das Verzeichnis verwendet wird, um Informationen über einen Besucher des Datenblocks in dem gemeinsam genutzten Datencache aufzuzeichnen, und der Besucher des Datenblocks der Prozessorkern ist, in dem eine Kopie des Datenblocks gespeichert ist; und das Verzeichnis ein Einzelzeigereintragsarray und ein gemeinsam genutztes Eintragsarray umfasst, wobei jeder Einzelzeigereintrag in dem Einzelzeigereintragsarray verwendet wird, um Informationen über einen einzelnen Besucher eines Datenblocks aufzuzeichnen, wenn der Datenblock einen einzelnen Besucher aufweist, und Informationen über eine Zuordnung zwischen dem Einzelzeigereintrag und einem gemeinsam genutzten Eintrag in dem gemeinsam genutzten Eintragsarray aufzuzeichnen, wenn ein Datenblock mehrere Besucher aufweist, und jeder gemeinsam genutzte Eintrag in dem gemeinsam genutzten Eintragsarray verwendet wird, um Informationen über mehrere Besucher eines Datenblocks aufzuzeichnen; und
eine Ausführungseinheit (1020), die dazu konfiguriert ist:
eine erste Zugriffsanforderung zu empfangen, die von einem ersten Prozessorkern gesendet wird, wobei die erste Zugriffsanforderung verwendet wird, um auf einen Eintrag, der einem ersten Datenblock entspricht, in dem Verzeichnis zuzugreifen;
gemäß der ersten Zugriffsanforderung zu bestimmen, dass das Einzelzeigereintragsarray einen ersten Einzelzeigereintrag aufweist, der dem ersten Datenblock entspricht; und
wenn gemäß dem ersten Einzelzeigereintrag bestimmt wird, dass das gemeinsam genutzte Eintragsarray einen ersten gemeinsam genutzten Eintrag aufweist, der dem ersten Einzelzeigereintrag zugeordnet ist, mehrere Besucher des ersten Datenblocks gemäß dem ersten gemeinsam genutzten Eintrag zu bestimmen;
wobei, nachdem die Ausführungseinheit die vom ersten Prozessorkern gesendete erste Zugriffsanforderung empfängt, die Ausführungseinheit ferner dazu konfiguriert ist:
gemäß der ersten Zugriffsanforderung zu bestimmen, dass das Einzelzeigereintragsarray keinen Einzelzeigereintrag aufweist, der dem ersten Datenblock entspricht; und
in dem Einzelzeigereintragsarray, den ersten Einzelzeigereintrag, der dem ersten Datenblock entspricht, dem ersten Datenblock zuzuweisen und Informationen über den ersten Prozessorkern in dem ersten Einzelzeigereintrag aufzeichnen;
wobei die Ausführungseinheit (1020) ferner dazu konfiguriert ist:
eine zweite Zugriffsanforderung zu empfangen, die von einem zweiten Prozessorkern gesendet wird, wobei die zweite Zugriffsanforderung verwendet wird, um auf den Eintrag, der dem ersten Datenblock entspricht, in dem Verzeichnis zuzugreifen;
gemäß der zweiten Zugriffsanforderung zu bestimmen, dass das Einzelzeigereintragsarray den ersten Einzelzeigereintrag aufweist, der dem ersten Datenblock entspricht;
wenn gemäß dem ersten Einzelzeigereintrag bestimmt wird, dass das gemeinsam genutzte Eintragsarray keinen gemeinsam genutzten Eintrag aufweist, der dem ersten Einzelzeigereintrag zugeordnet ist, zu bestimmen, gemäß dem ersten Einzelzeigereintrag, dass der einzelne Besucher des ersten Datenblocks der erste Prozessorkern ist; und
den ersten gemeinsam genutzten Eintrag in dem gemeinsam genutzten Eintragsarray zuzuweisen, eine Zuordnungsbeziehung zwischen dem ersten Einzelzeigereintrag und dem ersten gemeinsam genutzten Eintrag in dem ersten Einzelzeigereintrag einzurichten, und in dem ersten gemeinsam genutzten Eintrag die Informationen über den ersten Prozessorkern und Informationen über den zweiten Prozessorkern aufzuzeichnen.

7. Verzeichnis-Cache-Vorrichtung nach Anspruch 6, und wobei die Ausführungseinheit ferner dazu konfiguriert ist:
wenn gemäß dem ersten Einzelzeigereintrag bestimmt wird, dass das gemeinsam genutzte Eintragsarray keinen ersten gemeinsam genutzten Eintrag aufweist, der dem ersten Einzelzeigereintrag zugeordnet ist, einen einzelnen Besucher des ersten Datenblocks gemäß dem ersten Einzelzeigereintrag zu bestimmen.

8. Verzeichnis-Cache-Vorrichtung nach Anspruch 6, wobei die Ausführungseinheit ferner dazu konfiguriert ist:
wenn das Einzelzeigereintragsarray einen unbenutzten Einzelzeigereintrag aufweist, einen Einzelzeigereintrag aus dem unbenutzten Einzelzeigereintrag als den ersten Einzelzeigereintrag auszuwählen und die Informationen über den ersten Prozessorkern aufzuzeichnen; oder
einen Einzelzeigereintrag gemäß einem Prinzip des am zuletzt am wenigsten genutzten auszuwählen, wenn das Einzelzeigereintragsarray keinen unbenutzten Einzelzeigereintrag aufweist; und wenn der ausgewählte Einzelzeigereintrag nicht einem gemeinsam genutzten Eintrag zugeordnet ist und Informationen über den einzelnen Besucher aufzeichnet, eine Ungültigkeitsnachricht an den aufgezeichneten einzelnen Besucher zu senden und die Informationen über den ersten Prozessorkern in dem ausgewählten Einzelzeigereintrag aufzuzeichnen; oder
wenn der ausgewählte Einzelzeigereintrag nicht einem gemeinsam genutzten Eintrag zugeordnet ist und angibt, dass der Datenblock von allen Prozessorkernen in dem Mehrkernsystem gemeinsam genutzt wird, eine Ungültigkeitsnachricht an alle Prozessorkerne auszustrahlen und die Informationen über den ersten Prozessorkern in dem ausgewählten Einzelzeigereintrag aufzuzeichnen; oder
wenn der ausgewählte Einzelzeigereintrag einem gemeinsam genutzten Eintrag zugeordnet ist, gemäß dem gemeinsam genutzten Eintrag, der dem ausgewählten Einzelzeigereintrag zugeordnet ist, die mehreren Besucher, die in dem zugeordneten gemeinsam genutzten Eintrag aufgezeichnet sind, zu bestimmen, eine Ungültigkeitsnachricht an die aufgezeichneten mehreren Besucher zu senden und die Informationen über den ersten Prozessorkern in dem ausgewählten Einzelzeigereintrag aufzuzeichnen.

9. Verzeichnis-Cache-Vorrichtung nach einem der Ansprüche 6 bis 8, wobei der Einzelzeigereintrag ein Tag, ein Zuordnungsbit für den gemeinsam genutzten Eintrag und einen Einzelzeiger umfasst, wobei das Tag verwendet wird, um dem Datenblock zu entsprechen, das Zuordnungsbit für den gemeinsam genutzten Eintrag verwendet wird, um anzugeben, ob der Einzelzeigereintrag dem gemeinsam genutzten Eintrag zugeordnet ist, und der Einzelzeiger verwendet wird, um die Informationen über den einzelnen Besucher des Datenblocks aufzuzeichnen, wenn der Datenblock den einzelnen Besucher aufweist, und um die Informationen über die Zuordnung zwischen dem Einzelzeigereintrag und dem gemeinsam genutzten Eintrag aufzuzeichnen, wenn der Einzelzeigereintrag dem gemeinsam genutzten Eintrag zugeordnet ist; und
der gemeinsam genutzte Eintrag eine Aufzeichnungsstruktur für gemeinsame Nutzer und eine Zuordnungsstruktur umfasst, wobei die Aufzeichnungsstruktur für gemeinsame Nutzer verwendet wird, um die Informationen über die mehreren Besucher des Datenblocks aufzuzeichnen, und die Zuordnungsstruktur verwendet wird, um den Einzelzeigereintrag zuzuordnen.

10. Verzeichnis-Cache-Vorrichtung nach Anspruch 9, wobei der Einzelzeigereintrag ferner ein von allen genutztes Bit umfasst; und
das von allen genutzte Bit verwendet wird, um: wenn der Einzelzeigereintrag nicht dem gemeinsam genutzten Eintrag zugeordnet ist, anzugeben, dass der Datenblock den einzelnen Besucher aufweist oder anzugeben, dass der Datenblock von allen Prozessorkernen im Mehrkernsystem gemeinsam genutzt wird.

11. Mehrkernsystem, umfassend mehrere Prozessorkerne (1110), einen gemeinsam genutzten Datencache (1120) und die Verzeichnis-Cache-Vorrichtung (1000) nach einem der Ansprüche 6 bis 10.

## Revendications

1. Procédé permettant d'accéder à un répertoire de visiteurs de données dans un système multicœur, appliqué au système multicœur, dans lequel le système multicœur comprend une mémoire cache de données partagée et de multiples cœurs de processeurs, un bloc de données dans la mémoire cache de données partagée est copié dans au moins un cœur de processeur des multiples cœurs de processeurs, le système multicœur comprend en outre le répertoire de visiteurs de données, le répertoire est utilisé pour enregistrer des informations concernant un visiteur du bloc de données dans la mémoire cache de données partagée, et le visiteur du bloc de données est le cœur de processeur dans lequel est mémorisée une copie du bloc de données ;
le répertoire comprend un tableau d'entrées à pointeur unique et un tableau d'entrées de partage, dans lequel chaque entrée à pointeur unique dans le tableau d'entrées à pointeur unique est utilisée pour enregistrer des informations concernant un visiteur unique d'un bloc de données quand le bloc de données a un visiteur unique, et pour enregistrer des informations concernant une association entre l'entrée à pointeur unique et une entrée de partage dans le tableau d'entrées de partage quand un bloc de données a de multiples visiteurs, et chaque entrée de partage dans le tableau d'entrées de partage est utilisée pour enregistrer des informations concernant de multiples visiteurs d'un bloc de données ; et
le procédé comprend :
la réception (S610) d'une première demande d'accès envoyée par un premier cœur de processeur, la première demande d'accès étant utilisée pour accéder à une entrée, correspondant à un premier bloc de données, dans le répertoire ;
la détermination (S620), en fonction de la première demande d'accès, que le tableau d'entrées à pointeur unique possède une première entrée à pointeur unique correspondant au premier bloc de données ; et
lors de la détermination (S630), en fonction de la première entrée à pointeur unique, que le tableau d'entrées de partage possède une première entrée de partage associée à la première entrée à pointeur unique, la détermination de multiples visiteurs du premier bloc de données en fonction de la première entrée de partage ;
après la réception (S610) de la première demande d'accès envoyée par un premier cœur de processeur, le procédé comprenant en outre :
la détermination (S662), en fonction de la première demande d'accès, que le tableau d'entrées à pointeur unique ne possède pas d'entrée à pointeur unique correspondant au premier bloc de données ; et
l'attribution (S663) au premier bloc de données, dans le tableau d'entrées à pointeur unique, de la première entrée à pointeur unique correspondant au premier bloc de données, et l'enregistrement d'informations concernant le premier cœur de processeur dans la première entrée à pointeur unique ;
le procédé comprenant en outre :
la réception (S671) d'une seconde demande d'accès envoyée par un second cœur de processeur, la seconde demande d'accès étant utilisée pour accéder à l'entrée, correspondant au premier bloc de données, dans le répertoire ;
la détermination (S672), en fonction de la seconde demande d'accès, que le tableau d'entrées à pointeur unique possède la première entrée à pointeur unique correspondant au premier bloc de données ;
lors de la détermination, en fonction de la première entrée à pointeur unique, que le tableau d'entrées de partage ne possède pas d'entrée de partage associée à la première entrée à pointeur unique, la détermination (S673), en fonction de la première entrée à pointeur unique, que le visiteur unique du premier bloc de données est le premier cœur de processeur ; et
l'attribution (S674) de la première entrée de partage dans le tableau d'entrées de partage, l'établissement d'une relation d'association entre la première entrée à pointeur unique et la première entrée de partage dans la première entrée à pointeur unique, et l'enregistrement, dans la première entrée de partage, des informations concernant le premier cœur de processeur et des informations concernant le second cœur de processeur.

2. Procédé selon la revendication 1, le procédé comprenant en outre :
lors de la détermination, en fonction de la première entrée à pointeur unique, que le tableau d'entrées de partage ne possède pas de première entrée de partage associée à la première entrée à pointeur unique, la détermination (S640), en fonction de la première entrée à pointeur unique, d'un visiteur unique du premier bloc de données

3. Procédé selon la revendication 1, dans lequel l'attribution (S663) au premier bloc de données, dans le tableau d'entrées à pointeur unique, de la première entrée à pointeur unique correspondant au premier bloc de données, et l'enregistrement d'informations concernant le premier cœur de processeur dans la première entrée à pointeur unique comprennent :
si le tableau d'entrées à pointeur unique possède une entrée à pointeur unique inutilisée, la sélection d'une entrée à pointeur unique à partir de l'entrée à pointeur unique inutilisée en tant que première entrée à pointeur unique, et l'enregistrement des informations concernant le premier cœur de processeur ; ou
la sélection d'une entrée à pointeur unique en fonction d'un principe d'utilisation la moins récente si le tableau d'entrées à pointeur unique ne possède pas d'entrée à pointeur unique inutilisée ; et si l'entrée à pointeur unique sélectionnée n'est pas associée à une entrée de partage et enregistre des informations concernant un visiteur unique, l'envoi d'un message d'invalidation au visiteur unique enregistré et l'enregistrement des informations concernant le premier cœur de processeur dans l'entrée à pointeur unique sélectionnée ; ou
si l'entrée à pointeur unique sélectionnée n'est pas associée à une entrée de partage et indique que le bloc de données est partagé par tous les cœurs de processeurs dans le système multicœur, la radiodiffusion d'un message d'invalidation vers tous les cœurs de processeurs et l'enregistrement des informations concernant le premier cœur de processeur dans l'entrée à pointeur unique sélectionnée ; ou
si l'entrée à pointeur unique sélectionnée est associée à une entrée de partage, la détermination, en fonction de l'entrée de partage associée à l'entrée à pointeur unique sélectionnée, des multiples visiteurs enregistrés dans l'entrée de partage associée, l'envoi d'un message d'invalidation aux visiteurs multiples enregistrés, et l'enregistrement des informations concernant le premier cœur de processeur dans l'entrée à pointeur unique sélectionnée.

4. Procédé selon l'une quelconque des revendications 1 à 3, dans lequel l'entrée à pointeur unique comprend une étiquette, un bit d'association d'entrée de partage, et un pointeur unique, l'étiquette étant utilisée pour correspondre au bloc de données, le bit d'association d'entrée de partage étant utilisé pour indiquer si l'entrée à pointeur unique est associée à l'entrée de partage, et le pointeur unique étant utilisé pour enregistrer les informations concernant le visiteur unique du bloc de données quand le bloc de données a le visiteur unique et pour enregistrer les informations concernant l'association entre l'entrée à pointeur unique et l'entrée de partage quand l'entrée à pointeur unique est associée à l'entrée de partage ; et
une entrée de partage comprend une structure d'enregistrement pour les utilisateurs communs et une structure d'association, la structure d'enregistrement pour les utilisateurs communs étant utilisée pour enregistrer les informations concernant les visiteurs multiples du bloc de données, et la structure d'association étant utilisée pour associer l'entrée à pointeur unique.

5. Procédé selon la revendication 4, dans lequel l'entrée à pointeur unique comprend en outre un bit utilisé par tout le monde ; et
le bit utilisé par tout le monde est utilisé pour : quand l'entrée à pointeur unique n'est pas associée à l'entrée de partage, indiquer que le bloc de données a le visiteur unique ou indiquer que le bloc de données est partagé par tous les cœurs de processeurs dans le système multicœur.

6. Dispositif de mémoire cache de répertoire, comprenant :
une unité de stockage (1010) de répertoire, configurée pour stocker un répertoire de visiteurs de données qui est dans un système multicœur, le système multicœur comprenant une mémoire cache de données partagée et de multiples cœurs de processeurs, un bloc de données dans la mémoire cache de données partagée étant copié dans au moins un cœur de processeur des multiples cœurs de processeurs, le répertoire étant utilisé pour enregistrer des informations concernant un visiteur du bloc de données dans la mémoire cache de données partagée, et le visiteur du bloc de données étant le cœur de processeur dans lequel est mémorisée une copie du bloc de données ; et le répertoire comprend un tableau d'entrées à pointeur unique et un tableau d'entrées de partage, dans lequel chaque entrée à pointeur unique dans le tableau d'entrées à pointeur unique est utilisée pour enregistrer des informations concernant un visiteur unique d'un bloc de données quand le bloc de données a un visiteur unique, et pour enregistrer des informations concernant une association entre l'entrée à pointeur unique et une entrée de partage dans le tableau d'entrées de partage quand un bloc de données a de multiples visiteurs, et chaque entrée de partage dans le tableau d'entrées de partage est utilisée pour enregistrer des informations concernant de multiples visiteurs d'un bloc de données ; et
une unité d'exécution (1020), configurée pour :
recevoir une première demande d'accès envoyée par un premier cœur de processeur, la première demande d'accès étant utilisée pour accéder à une entrée, correspondant à un premier bloc de données, dans le répertoire ;
déterminer, en fonction de la première demande d'accès, que le tableau d'entrées à pointeur unique possède une première entrée à pointeur unique correspondant au premier bloc de données ; et
lors de la détermination, en fonction de la première entrée à pointeur unique, que le tableau d'entrées de partage possède une première entrée de partage associée à la première entrée à pointeur unique, déterminer les visiteurs multiples du premier bloc de données en fonction de la première entrée de partage ;
dans lequel, après que l'unité d'exécution a reçu la première demande d'accès envoyée par le premier cœur de processeur, l'unité d'exécution est en outre configurée pour :
déterminer, en fonction de la première demande d'accès, que le tableau d'entrées à pointeur unique ne possède pas d'entrée à pointeur unique correspondant au premier bloc de données ; et
attribuer au premier bloc de données, dans le tableau d'entrées à pointeur unique, la première entrée à pointeur unique correspondant au premier bloc de données, et
enregistrer des informations concernant le premier cœur de processeur dans la première entrée à pointeur unique ;
dans lequel l'unité d'exécution (1020) est en outre configurée pour :
recevoir une seconde demande d'accès envoyée par un second cœur de processeur, la seconde demande d'accès étant utilisée pour accéder à l'entrée, correspondant au premier bloc de données, dans le répertoire ;
déterminer, en fonction de la seconde demande d'accès, que le tableau d'entrées à pointeur unique possède la première entrée à pointeur unique correspondant au premier bloc de données ;
lors de la détermination, en fonction de la première entrée à pointeur unique, que le tableau d'entrées de partage ne possède pas d'entrée de partage associée à la première entrée à pointeur unique, déterminer, en fonction de la première entrée à pointeur unique, que le visiteur unique du premier bloc de données est le premier cœur de processeur ; et
attribuer la première entrée de partage dans le tableau d'entrées de partage, établir une relation d'association entre la première entrée à pointeur unique et la première entrée de partage dans la première entrée à pointeur unique, et enregistrer, dans la première entrée de partage, les informations concernant le premier cœur de processeur et les informations concernant le second cœur de processeur.

7. Dispositif de mémoire cache de répertoire selon la revendication 6, et l'unité d'exécution est en outre configurée pour :
lors de la détermination, en fonction de la première entrée à pointeur unique, que le tableau d'entrées de partage ne possède pas de première entrée de partage associée à la première entrée à pointeur unique, déterminer, en fonction de la première entrée à pointeur unique, un visiteur unique du premier bloc de données.

8. Dispositif de mémoire cache de répertoire selon la revendication 6, dans lequel l'unité d'exécution est en outre configurée pour :
si le tableau d'entrées à pointeur unique possède une entrée à pointeur unique inutilisée, sélectionner une entrée à pointeur unique à partir de l'entrée à pointeur unique inutilisée en tant que première entrée à pointeur unique, et enregistrer les informations concernant le premier cœur de processeur ; ou
sélectionner une entrée à pointeur unique en fonction d'un principe d'utilisation la moins récente si le tableau d'entrées à pointeur unique ne possède pas d'entrée à pointeur unique inutilisée ; et si l'entrée à pointeur unique sélectionnée n'est pas associée à une entrée de partage et enregistre des informations concernant le visiteur unique, envoyer un message d'invalidation au visiteur unique enregistré et enregistrer les informations concernant le premier cœur de processeur dans l'entrée à pointeur unique sélectionnée ; ou
si l'entrée à pointeur unique sélectionnée n'est pas associée à une entrée de partage et indique que le bloc de données est partagé par tous les cœurs de processeurs dans le système multicœur, radiodiffuser un message d'invalidation vers tous les cœurs de processeurs et enregistrer les informations concernant le premier cœur de processeur dans l'entrée à pointeur unique sélectionnée ; ou
si l'entrée à pointeur unique sélectionnée est associée à une entrée de partage, déterminer, en fonction de l'entrée de partage associée à l'entrée à pointeur unique sélectionnée, les multiples visiteurs enregistrés dans l'entrée de partage associée, envoyer un message d'invalidation aux visiteurs multiples enregistrés, et enregistrer les informations concernant le premier cœur de processeur dans l'entrée à pointeur unique sélectionnée.

9. Dispositif de mémoire cache de répertoire selon l'une quelconque des revendications 6 à 8, dans lequel
l'entrée à pointeur unique comprend une étiquette, un bit d'association d'entrée de partage et un pointeur unique, dans lequel l'étiquette est utilisée pour correspondre au bloc de données, le bit d'association d'entrée de partage est utilisé pour indiquer si l'entrée à pointeur unique est associée à l'entrée de partage, et le pointeur unique est utilisé pour enregistrer les informations concernant le visiteur unique du bloc de données quand le bloc de données a le visiteur unique et pour enregistrer les informations concernant l'association entre l'entrée à pointeur unique et l'entrée de partage quand l'entrée à pointeur unique est associée à l'entrée de partage ; et l'entrée de partage comprend une structure d'enregistrement pour les utilisateurs communs et une structure d'association, dans lequel la structure d'enregistrement pour les utilisateurs communs est utilisée pour enregistrer les informations concernant les visiteurs multiples du bloc de données, et la structure d'association est utilisée pour associer l'entrée à pointeur unique.

10. Dispositif de mémoire cache de répertoire selon la revendication 9, dans lequel l'entrée à pointeur unique comprend en outre un bit utilisé par tout le monde; et
le bit utilisé par tout le monde est utilisé pour : quand l'entrée à pointeur unique n'est pas associée à l'entrée de partage, indiquer que le bloc de données a le visiteur unique ou indiquer que le bloc de données est partagé par tous les cœurs de processeurs dans le système multicœur.

11. Système multicœur, comprenant de multiples cœurs (1110) de processeurs, une mémoire cache de données partagée (1120), et le dispositif de mémoire cache (1000) de répertoire selon l'une quelconque des revendications 6 à 10.
